# EUROPÄISCHE PATENTSCHRIFT

(11) **EP 3 020 581 B1**
(45) Veröffentlichungstag und Bekanntmachung des Hinweises auf die Patenterteilung: **19.07.2017**
(21) Anmeldenummer: 15002721.7
(22) Anmeldetag: 21.09.2015
(51) Int. Cl.: B60G 11/28, B60B 35/00, B60G 11/30, B60G 9/00

(54) **LUFTFEDERTRÄGER FÜR EINE LUFTGEFEDERTE ACHSE EINES NUTZFAHRZEUGS**
PNEUMATIC SUPPORT FOR A PNEUMATICALLY SUPPORTED AXLE OF A COMMERCIAL VEHICLE
SUPPORT DE SUSPENSION PNEUMATIQUE POUR UN ESSIEU A SUSPENSION PNEUMATIQUE D'UN VEHICULE UTILITAIRE

(30) Priorität: 12.11.2014 DE 102014016678
(43) Veröffentlichungstag der Anmeldung: 18.05.2016
(73) Patentinhaber: MAN Truck & Bus AG, 80995 München (DE)
(72) Erfinder: ELBS, Norbert, 80639 München (DE); ERTELT, Christoph, 81543 München (DE); RUBSAMEN, Susanne, 80687 München (DE); KREISEL, Markus, 86495 Eurasburg (DE)
(74) Vertreter: v. Bezold & Partner Patentanwälte - PartG mbB

(56) Entgegenhaltungen:
- EP-A1- 0 599 293
- EP-A2- 0 341 634
- WO-A1-01/94135
- WO-A2-2007/057698
- CN-B- 101 885 296
- CN-U- 203 126 438
- DE-U1-202004 007 889
- JP-A- H0 796 725

## Beschreibung

Die Erfindung betrifft einen Luftfederträger nach dem Oberbegriff des Anspruchs 1.

Ein Luftfederträger ist ein Fahrwerksbauteil und dient als Verbindung zwischen Fahrwerk und Achse. Am Luftfederträger sind die Luftfedern und vorzugsweise auch die Dämpfer für die Chassislagerung befestigt. In herkömmlicher Weise wird der Luftfederträger am Achskörper einer Starrachse angeordnet. Aus der Praxis ist es bekannt, bei einem Nutzfahrzeug pro Hinterachse zwei Luftfederträger zu verbauen. Im Nutzfahrzeugbereich sind lineare und U-förmige Ausführungen der Luftfederträger bekannt. Bei Omnibussen werden üblicherweise U-förmige Luftfederträger eingesetzt. Die Luftfedern befinden sich vor und hinter den Reifen. Die U-Form des Luftfederträgers erlaubt das "Umgreifen" der Räder, so dass der größere Abstand der Luftfeder zum Wankzentrum das Wanken reduziert und damit den Fahrkomfort deutlich erhöht.

Der Grund für die aufwändigere Form gegenüber der des LKWs liegt auch in der Rahmenstruktur von Omnibussen. Die tragenden Strukturen von Omnibussen befinden sich auch im Gitterrahmen der Außenwände. Der Luftfederträger soll die Kräfte des Fahrwerks möglichst direkt in diese Tragstrukturen einbringen.

Die DE 20 2004 007 889 U1 offenbart einen U-förmigen Luftfederträger, der als Metallkonstruktion ausgeführt ist. Der Luftfederträger umfasst einen Trägerkörper, der als Hohlkörper ausgebildet ist und der aus zwei im Wesentlichen symmetrischen metallischen Halbschalen, die in einer mittleren, horizontalen Symmetrieebene des Hohlkörpers angeordnet sind, zusammengeschweißt ist. Die WO 01 94 135 A1 offenbart einen Luftfederträger, der als ein einstückiger, kernloser, voll gegossener Bauteil hergestellt ist. Als nachteilig an diesem Luftfederträger hat sich das hohe Gewicht erwiesen. Ferner können zusätzlich eingeschweißte Winkel aufgrund einer variablen Schweißnahtgüte zu einer Streuung in der Beanspruchbarkeit führen, was insbesondere bei Fahrzeugen mit harten Einsatzprofilen nachteilig ist. Ferner sind zur Fertigung der Halbschalen aufwändige Werkzeuge und für die prozesssichere Fertigung ein hoher Aufwand erforderlich.

Es ist somit eine Aufgabe der Erfindung, einen verbesserten Luftfederträger für eine luftgefederte Achse eines Nutzfahrzeugs bereitzustellen, mit dem Nachteile herkömmlicher Luftfederträger vermieden werden können. Die Aufgabe der Erfindung ist es insbesondere, einen Luftfederträger bereitzustellen, der bei hoher Festigkeit mit verringertem Gewicht hergestellt werden kann.

Diese Aufgaben werden durch einen Luftfederträger mit den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß wird ein Luftfederträger für eine luftgefederte Achse eines Kraftfahrzeugs, vorzugsweise eines Nutzfahrzeugs, vorgeschlagen. Der Luftfederträger kann insbesondere ein Luftfederträger für eine Starrachse eines Omnibusses sein.

Der erfindungsgemäße Luftfederträger umfasst in Übereinstimmung mit dem Stand der Technik einen Grundkörper, aufweisend einen mittleren Bereich und zwei Tragarme. Die beiden Tragarme sind auf gegenüberliegenden Seiten des mittleren Bereichs angeordnet. Die Tragarme können gerade oder gekrümmt ausgeführt sein. Der Luftfederträger umfasst ferner ein am mittleren Bereich angeordnetes erstes Befestigungsmittel zur achsseitigen Anbindung des Luftfederträgers an einer Achse des Fahrwerks und ein zweites Befestigungsmittel zur Halterung einer Luftfeder und/oder eines Dämpfungselements, das an jedem Arm vorgesehen ist. An jedem Arm können insbesondere zwei derartige zweite Befestigungsmittel vorgesehen sein, ein erstes zur Halterung einer Luftfeder und ein zweites zur Halterung eines Dämpfungselements.

Gemäß allgemeinen Gesichtspunkten der Erfindung bilden der mittlere Bereich und die Tragarme ein einteiliges Bauteil aus, d. h., der Verbindungsbereich zwischen mittlerem Bereich und den Tragarmen ist fügeverbindungsfrei. Ferner ist der Grundkörper aus einem Faserverbundmaterial. Vorzugsweise ist der Grundkörper aus einem Faserverbundkunststoff gefertigt, aufweisend eine bettende Matrix aus Kunststoff. Gemäß bevorzugten Ausführungsformen kann der Faserverbundwerkstoff verstärkende Kohlestofffasern und/oder Glasfasern enthalten. Die Erfindung umfasst also die allgemeine technische Lehre, einen Grundkörper des Luftfederträgers zu verwenden, der aus Endlosfassersträngen gefertigt ist.

Dadurch kann ein Luftfederträger mit hoher Stabilität und verringertem Gewicht bereitgestellt werden. Ein weiterer Vorteil gegenüber herkömmlichen Luftfederträgern, die als Metallkonstruktion ausgeführt sind, ist, dass wesentlich mehr Möglichkeiten zur Verfügung stehen, die Bauteileigenschaften festzulegen und/oder zu variieren. So können über die Faserorientierung und den Lagenaufbau, z. B. durch Festlegen der Faserlage, des Faserwinkels, der Art der Faser und die Wahl des Matrixsystems, die Eigenschaften des Grundkörpers, insbesondere dessen Festigkeit, festgelegt werden. Ferner besteht die Möglichkeit, über den Laminataufbau insbesondere die Biegesteifigkeit anzupassen.

Zur Herstellung des Grundkörpers aus dem Faserverbundwerkstoff kann eines der bekannten Verfahren zur Herstellung von Bauteilen aus einem Faserverbundwerkstoff verwendet werden. Insbesondere kann der Grundkörper durch Wickeln, Flechten und/oder Laminieren hergestellt werden.

Weiterhin besteht im Rahmen der Erfindung die Möglichkeit, dass das zweite Befestigungsmittel eine Buchse aufweist, die in einen Arm eingebracht ist. Vorzugsweise sind an jedem Arm je eine Buche zur Halterung der Luftfeder und eine Buchse zur Halterung des Dämpferelements vorgesehen. Die Buchsen können aus Metall oder aus Kunststoff gefertigt sein. Die Buchse kann beim Fertigungsprozess in den Grundkörper integriert werden oder eingepresst und/oder eingeklebt werden.

Ferner besteht im Rahmen der Erfindung die Möglichkeit, dass in den mittleren Bereich und/oder im Bereich der zweiten Befestigungseinrichtung des Grundkörpers ein oder mehrere Verstärkungselemente (sog. Patches) eingebracht sind, insbesondere an den Stellen des Grundkörpers, die einer erhöhten Flächenpressung ausgesetzt sind. Dadurch kann die Festigkeit gezielt an hochbelasteten Stellen erhöht werden. Bei einer vorteilhaften Variante dieser Ausgestaltungsform sind das oder die Verstärkungselemente als ein zusätzliches Gelege, ein Gewebe oder eine Matte aus Faserverbundwerkstoff ausgeführt, die in den Grundkörper eingebracht sind.

Eine weitere Möglichkeit der erfindungsgemäßen Realisierung sieht vor, dass die erste Befestigungseinrichtung zur achsseitigen Anbindung eine Platte zur Aufnahme der Achse aufweist, die aus Kunststoff, einem Faserverbundkunststoff und/oder aus Metall gefertigt ist. Ferner kann auf der gegenüberliegenden Seite eine Gegenplatte angeordnet sein, die ebenfalls aus einem Kunststoff, einem Faserverbundkunststoff und/oder aus Metall gefertigt ist. Gemäß einer weiteren Variante kann eine dem Grundkörper zugewandte Seite der Platte und der Gegenplatte eine Außenkontur aufweisen, die formangepasst zur der Außenkontur einer den Platten jeweils zugewandten Seite des mittleren Bereichs ist. Die ermöglicht eine besonders stabile Befestigung der Platte und der Gegenplatte auf dem Grundkörper.

Zur Erzielung eines möglichst geringen Bauteilegewichts kann gemäß einem weiteren Aspekt der Erfindung der Grundkörper aus dem Verbundwerkstoff ein Hohlkörper mit einem Hohlraum sein. Bei einer weiteren Variante ist ein Schaumstoffkern im gesamten Hohlraum oder in Teilen des Hohlraums des Hohlkörpers angeordnet, was die Dämmeigenschaften des Luftfederträgers verbessert.

Zur Verwendung bei Omnibussen ist es vorteilhaft, wenn der Grundkörper ein gebogenes oder gekrümmtes Profil aufweist. Insbesondere kann der Grundkörper U-förmig, insbesondere gestreckt U-förmig, ausgeführt sein. Der Grundkörper kann jedoch auch ein gerades Profil aufweisen.

Ferner können an der Platte und/oder der Gegenplatte Befestigungsmittel angeordnet sein, um einen Fahrwerkslenker mit der Platte und/oder der Gegenplatte zu verbinden.

Ein weiterer Aspekt der Erfindung betrifft ein Nutzfahrzeug, insbesondere einen Omnibus, aufweisend einen Luftfederträger, wie in diesem Dokument offenbart. Die Erfindung betrifft ferner ein Nutzfahrzeug, bei dem das Chassis mittels wenigstens eines Luftfederträgers nach einem der vorhergehenden Aspekte an der Starrachse gelagert ist.

Weitere Einzelheiten und Vorteile der Erfindung werden im Folgenden unter Bezug auf die beigefügten Zeichnungen beschrieben. Es zeigen:
- Figur 1: eine Perspektivansicht eines Luftfederträgers gemäß einer Ausführungsform der Erfindung in einem an einer Achse festgelegten Zustand;
- Figur 2: eine Perspektivansicht des Grundkörpers des Luftfederträgers gemäß einer Ausführungsform; und
- Figur 3: eine Perspektivansicht des Luftfederträgers gemäß einer Ausführungsform.

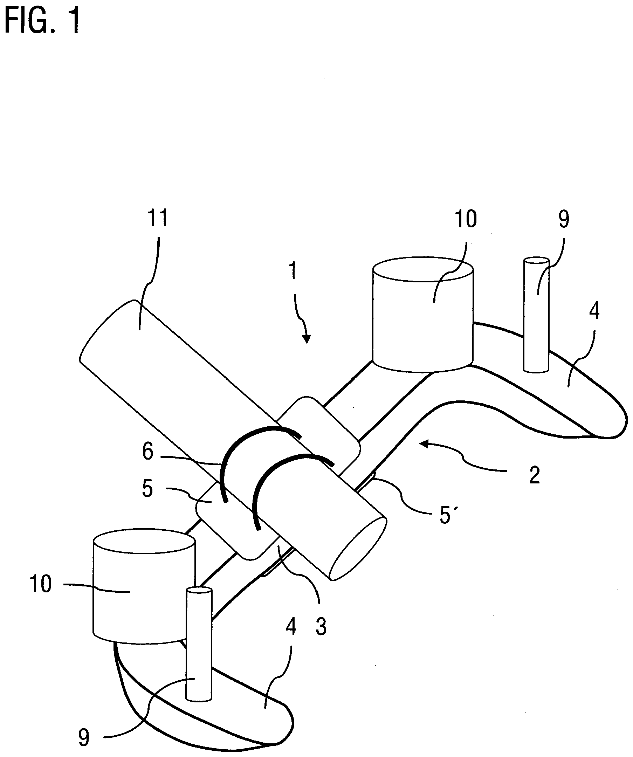

Figur 1 zeigt eine Perspektivansicht eines Luftfederträgers 1 für eine luftgefederte Starrachse eines Omnibusses gemäß einer Ausführungsform der Erfindung. Figur 1 zeigt den Luftfederträger in einem an einer Achse 11 festgelegten Zustand. Der Luftfederträger 1 hat einen gestreckt U-förmig ausgebildeten Grundkörper 2, aufweisend einen mittleren Bereich 3 und zwei sich auf gegenüberliegenden Seiten des mittleren Bereichs 3 von diesem wegerstreckende Tragarme bzw. Schenkel 4. Der mittlere Bereich 3 und die Tragarme 4 bilden ein einteiliges Bauteil aus. Der Grundkörper ist aus einem Faserverbundkunststoff gefertigt, der Kohlenstoff- und/oder Glasfasern enthält.

Um den Luftfederträger an der Starrachse 11 festzulegen, ist eine Platte 5 zur Aufnahme der Achse 11 auf dem mittleren Bereich 3 befestigt, z. B. angeklebt. Als Gegenstück auf der gegenüberliegenden Seite des Grundkörpers 2 dient eine Gegenplatte 5'. Die Platten 5, 5' können aus Kunststoff, einem Faserverbundkunststoff und/oder aus Metall gefertigt sein.

Im montierten Zustand des Luftfederträgers 1 liegt die Starrachse auf der dem Grundkörper abgewandten Seite der Platte 5 auf und wird mittels zweier Haltebügel 6, die die Starrachse 11 umgreifen, an der Platte 5 befestigt.

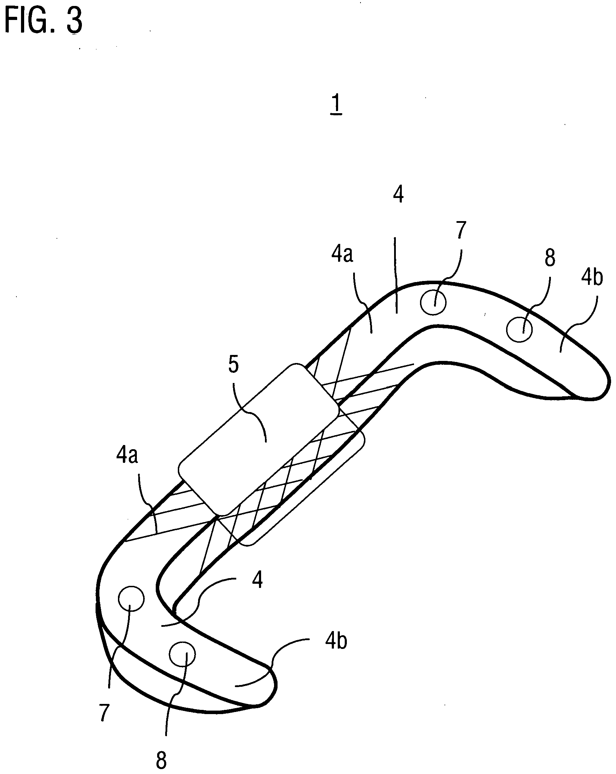

Auf jedem der Arme 4 sind ein Luftfederbalg 10 und ein Dämpfungselement 9 gehaltert. Hierzu sind in den Grundköper Metallbuchsen 7, 8 eingebracht, was in Figur 3 dargestellt ist. Die Buchsen 7, 8 können als Durchgangsbuchsen ohne Innengewinde ausgeführt sein. In diesem Fall werden der Luftfederträger 7 und die Dämpfer 8 in die jeweilige Buchse gesteckt und ragen mit einem Verschraubungsbereich (nicht gezeigt) auf der Unterseite des Tragarms 4 aus dieser heraus. Der Verschraubungsbereich wird mit einer Mutter gekontert. Alternativ können die Buchsen 7, 8 ein zu einem Außengewinde des Verschraubungsbereichs komplementäres Innengewinde aufweisen. Die Buchsen 7, 8 können beim Fertigungsprozess in den Grundkörper 2 integriert werden oder eingepresst und/oder eingeklebt werden. Die Arme 4 weisen im Falle einer U-förmigen Ausführung des Luftfederträgers 1 jeweils einen ersten Abschnitt 4a, der sich im montieren Zustand des Luftfederträgers 1 in Längsrichtung des Fahrzeugs erstreckt, und einen zweiten Abschnitt 4b, der sich im montieren Zustand des Luftfederträgers 1 zur Fahrzeuginnenseite hin erstreckt, auf. Die Buchsen 7, 8 sind auf dem zweiten Abschnitt 4b angeordnet.

Zur Herstellung des Grundkörpers 2 aus dem Faserverbundwerkstoff kann eines der bekannten Verfahren zur Herstellung von Bauteilen aus einem Faserverbundwerkstoff verwendet werden. Insbesondere kann der Grundkörper durch Wickeln, Flechten und/oder Laminieren hergestellt werden. Über die Faserorientierung und den Lageaufbau, z. B. +/- 45° Faserlage und 0° Faserwinkel, wird die Eigenschaft des Bauteils bestimmt und die Festigkeit erzielt. Die Art der Faser und des Matrixsystems wird durch die Bauteilanforderung bestimmt und entsprechend geeignet festgelegt. Über den Laminataufbau kann die Eigenschaft wie Biegesteifigkeit speziell auf das Bauteil angepasst werden. Durch die Materialdämpfung können Anregungen seitens der Fahrbahn reduziert werden.

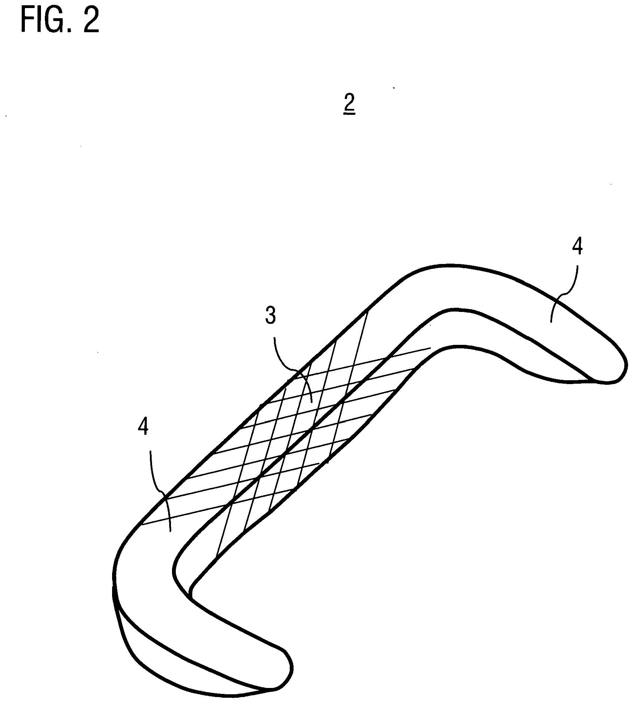

In Figur 2 ist nochmals der Grundkörper 2 mit dem Mittelteil 3 und den Armen 4 nach dem Faserverbund-Herstellungsverfahren dargestellt, bevor die Befestigungsplatte 5 und die Buchsen 7, 8 angebracht werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Luftfederträger
- 2: Grundkörper
- 3: Mittlerer Bereich
- 4: Tragarm
- 5: Befestigungsplatte
- 5': Gegenplatte
- 6: Haltebügel
- 7,8: Buchse
- 9: Dämpfer
- 10: Luftfeder
- 11: Starrachse

## Patentansprüche

1. Luftfederträger (1) für eine luftgefederte Achse eines Kraftfahrzeugs, vorzugsweise Nutzfahrzeugs, umfassend
einen Grundkörper (2), aufweisend einen mittleren Bereich (3) und zwei Tragarme (4), die auf gegenüberliegenden Seiten des mittleren Bereichs (3) angeordnet sind;
ein erstes Befestigungsmittel (5, 5', 6) zur achsseitigen Anbindung des Luftfederträgers, das am mittleren Bereich (3) angeordnet ist; und
ein zweites Befestigungsmittel (7) zur Halterung einer Luftfeder und/oder eines Dämpfungselements, das an jedem Arm (4) vorgesehen ist;
**dadurch gekennzeichnet,**
**dass** der mittlere Bereich (3) und die Tragarme (4) ein einteiliges Bauteil ausbilden und der Grundkörper (2) aus einem Faserverbundmaterial gefertigt ist.

2. Luftfederträger (1) nach Anspruch 1, **dadurch gekennzeichnet,**
(a) **dass** das Faserverbundmaterial eine bettende Matrix aus Kunststoff enthält; und/oder
(b) **dass** das Faserverbundmaterial verstärkende Kohlestofffasern und/oder Glasfasern enthält.

3. Luftfederträger (1) nach Anspruch 1 oder 2, **dadurch gekennzeichnet, dass** das zweite Befestigungsmittel eine Buchse (7, 8) aufweist, die in einen Arm (4) eingebracht ist.

4. Luftfederträger nach Anspruch 1 oder 2, **dadurch gekennzeichnet, dass** in den mittleren Bereich (3) und/oder im Bereich der zweiten Befestigungseinrichtung des Grundkörpers wenigstens ein Verstärkungselement eingebracht ist.

5. Luftfederträger nach Anspruch 4, **dadurch gekennzeichnet, dass** das wenigstens eine Verstärkungselement als ein zusätzliches Gelege, Gewebe oder Matte aus einem Faserverbundwerkstoff ausgeführt ist.

6. Luftfederträger (1) nach einem der vorhergehenden Ansprüche, **dadurch gekennzeichnet, dass** die erste Befestigungseinrichtung (5, 6) zur achsseitigen Anbindung eine Platte (5) und eine Gegenplatte (5') zur Aufnahme der Achse (11) aufweist, die aus Kunststoff, einem Faserverbundkunststoff und/oder aus Metall gefertigt sind.

7. Luftfederträger (1) nach Anspruch 6, **dadurch gekennzeichnet, dass** eine dem Grundkörper (2) zugewandte Seite der Platten (5, 5') eine Außenkontur aufweist, die formangepasst zur Außenkontur einer der Platte (5, 5') zugewandten Seite des mittleren Bereichs (3) ist.

8. Luftfederträger (1) nach einem der vorhergehenden Ansprüche, **dadurch gekennzeichnet, dass** der Grundkörper (2) ein Hohlkörper mit einem Hohlraum ist.

9. Luftfederträger nach Anspruch 8, **gekennzeichnet durch** ein oder mehrere Schaumstoffelemente, das oder die im Hohlraum des Hohlkörpers angeordnet ist/sind.

10. Luftfederträger (1) nach einem der vorhergehenden Ansprüche, **dadurch gekennzeichnet,**
(a) **dass** der Grundkörper (2) ein gebogenes oder gekrümmtes Profil aufweist, insbesondere gestreckt U-förmig ausgeführt ist; und/oder
(b) **dass** der Grundkörper ein gerades Profil aufweist.

11. Luftfederträger (1) nach einem der vorhergehenden Ansprüche, **dadurch gekennzeichnet, dass** an der Platte (5) und/oder der Gegenplatte (5') Befestigungsmittel angeordnet sind, um einen Fahrwerkslenker mit der Platte (5) und/oder der Gegenplatte zu verbinden.

12. Nutzfahrzeug, insbesondere Omnibus, aufweisend einen Luftfederträger (1) nach einem der vorhergehenden Ansprüche.

## Claims

1. Air spring carrier (1) for an air-sprung axle of a motor vehicle, preferably a commercial vehicle, comprising
a main body (2), having a central region (3) and two supporting arms (4), which are arranged on opposite sides of the central region (3);
a first fastening means (5, 5', 6) for the axleside attachment of the air spring carrier, said fastening means being arranged on the central region (3); and
a second fastening means (7) for retaining an air spring and/or a damping element, said means being provided on each arm (4);
**characterized**
**in that** the central region (3) and the supporting arms (4) form a one-piece component and the main body (2) is manufactured from a fibre composite material.

2. Air spring carrier (1) according to Claim 1, **characterized**
(a) **in that** the fibre composite material contains a bedding matrix composed of plastic; and/or
(b) **in that** the fibre composite material contains reinforcing carbon fibres and/or glass fibres.

3. Air spring carrier (1) according to Claim 1 or 2, **characterized in that** the second fastening means has a bushing (7, 8), which is introduced into an arm (4).

4. Air spring carrier according to Claim 1 or 2, **characterized in that** at least one reinforcing element is introduced into the central region (3) and/or in the region of the second fastening device of the main body.

5. Air spring carrier according to Claim 4, **characterized in that** the at least one reinforcing element is embodied as an additional non-crimped fabric, woven fabric or mat composed of a fibre composite material.

6. Air spring carrier (1) according to one of the preceding claims, **characterized in that** the first fastening device (5, 6) for axle-side attachment has a plate (5) and a counter plate (5') for receiving the axle (11), which are manufactured from plastic, a fibre composite plastic and/or from metal.

7. Air spring carrier (1) according to Claim 6, **characterized in that** a side of the plates (5, 5') facing the main body (2) has an outer contour which is matched in shape to the outer contour of a side of the central region (3) which faces the plate (5, 5').

8. Air spring carrier (1) according to one of the preceding claims, **characterized in that** the main body (2) is a hollow body having a cavity.

9. Air spring carrier according to Claim 8, **characterized by** one or more foam elements, which is/are arranged in the cavity of the hollow body.

10. Air spring carrier (1) according to one of the preceding claims, **characterized**
(a) **in that** the main body (2) has a bent or curved profile, in particular is embodied in the form of an extended U shape; and/or
(b) **in that** the main body has a straight profile.

11. Air spring carrier (1) according to one of the preceding claims, **characterized in that** fastening means are arranged on the plate (5) and/or the counter plate (5') in order to connect a running gear link to the plate (5) and/or the counter plate.

12. A commercial vehicle, in particular a bus, having an air spring carrier (1) according to one of the preceding claims.

## Revendications

1. Support de suspension pneumatique (1) pour un essieu à suspension pneumatique d'un véhicule automobile, de préférence d'un véhicule utilitaire, comprenant :
un corps de base (2) présentant une région centrale (3) et deux bras porteurs (4) qui sont disposés sur des côtés opposés de la région centrale (3) ;
un premier moyen de fixation (5, 5', 6) pour le raccordement, du côté de l'essieu, du support de suspension pneumatique, qui est disposé au niveau de la région centrale (3) ; et
un deuxième moyen de fixation (7) pour la fixation d'un ressort pneumatique et/ou d'un élément d'amortissement qui est prévu sur chaque bras (4) ;
**caractérisé en ce que**
la région centrale (3) et les bras porteurs (4) constituent un composant d'une seule pièce et le corps de base (2) est fabriqué en un matériau composite renforcé par des fibres.

2. Support de suspension pneumatique (1) selon la revendication 1, **caractérisé en ce que**
(a) le matériau composite renforcé par des fibres contient une matrice de support en plastique ; et/ou
(b) le matériau composite renforcé par des fibres contient des fibres de carbone et/ou des fibres de verre de renforcement.

3. Support de suspension pneumatique (1) selon la revendication 1 ou 2, **caractérisé en ce que** le deuxième moyen de fixation présente une douille (7, 8) qui est incorporée dans un bras (4).

4. Support de suspension pneumatique selon la revendication 1 ou 2, **caractérisé en ce qu'**au moins un élément de renforcement est incorporé dans la région centrale (3) et/ou dans la région du deuxième dispositif de fixation du corps de base.

5. Support de suspension pneumatique selon la revendication 4, **caractérisé en ce que** l'au moins un élément de renforcement est réalisé sous forme de nappe, de tissu ou de mat supplémentaire en matériau composite renforcé par des fibres.

6. Support de suspension pneumatique (1) selon l'une quelconque des revendications précédentes, **caractérisé en ce que** le premier dispositif de fixation (5, 6) présente, pour le raccordement du côté de l'essieu, une plaque (5) et une plaque conjuguée (5') pour recevoir l'essieu (11), lesquelles sont fabriquées en plastique, en plastique composite renforcé par des fibres et/ou en métal.

7. Support de suspension pneumatique (1) selon la revendication 6, **caractérisé en ce qu'**un côté des plaques (5, 5') tourné vers le corps de base (2) présente un contour extérieur qui est adapté de par sa forme au contour extérieur d'un côté de la région centrale (3) tourné vers la plaque (5, 5').

8. Support de suspension pneumatique (1) selon l'une quelconque des revendications précédentes, **caractérisé en ce que** le corps de base (2) est un corps creux avec une cavité.

9. Support de suspension pneumatique selon la revendication 8, **caractérisé par** un ou plusieurs éléments en mousse qui est/sont disposés dans la cavité du corps creux.

10. Support de suspension pneumatique (1) selon l'une quelconque des revendications précédentes, **caractérisé en ce que**
(a) le corps de base (2) présente un profil cintré ou courbé, en particulier est réalisé sous forme de U étiré ; et/ou
(b) le corps de base présente un profil droit.

11. Support de suspension pneumatique (1) selon l'une quelconque des revendications précédentes, **caractérisé en ce que** des moyens de fixation sont disposés au niveau de la plaque (5) et/ou de la plaque conjuguée (5'), afin de relier un bras oscillant de châssis à la plaque (5) et/ou à la plaque conjuguée.

12. Véhicule utilitaire, en particulier omnibus, présentant un support de suspension pneumatique (1) selon l'une quelconque des revendications précédentes.
